# EUROPEAN PATENT APPLICATION

(11) **EP 1 827 046 A1**
(43) Date of publication of application: **29.08.2007**
(21) Application number: 06290306.7
(22) Date of filing: 23.02.2006
(51) Int. Cl.: H04Q 7/38

(54) **Method and system for enabling mobility awareness single number service**

(71) Applicant: FRANCE TELECOM, 75015 Paris (FR)
(72) Inventor: Jindong, Hou, Chiswick, London W4 5AU (GB)
(74) Representative: Loisel, Bertrand

(57) **Abstract**

The present invention provides an improved method and system to enable network intelligence and user mobility awareness in a system with a dynamic and optimized single number solution. In particular, the invention uses a mobility management service or mobility manager (12) that provides a mobility awareness single number system, which keeps up-to-date information about service availability for different types of services. This way, the single number manager (10) can consider both the user service preferences (30) and current service availabilities (34) to designate the most appropriate service choice for the information exchange between the communicating parties. Since the single number service is dynamically adapted to user network position, the invention avoids all the inefficiencies associated with unavailable services.

## Description

### FIELD OF THE INVENTION

The invention relates to mobility management and single number service (SN). In particular, the present invention relates to providing a mobility awareness single number solution.

### BACKGROUND OF THE INVENTION

Today, many different types of fixed and mobile networks exist, such as mobile cellular networks, for example of the GSM type (global system for mobile communications), public switched telephone networks (PSTN), wireless local area networks (WLAN), WiMax, networks using the Internet protocol (IP) and the like. These networks offer subscribers distinct types of services and if these networks are completely independent of each other, subscribers may need to have different numbers for each different service provided by the network. For example, generally most have different cell phone and fixed telephone numbers for GSM and fixed PSTN networks.

Single Number (SN) technology is a solution which provides a single number for the user to access a variety of services, or to access certain service resources via a variety of communication means. A user only requires a single number to reach a callee via a variety of different services, such as Voice over IP (VoIP) telephone services, voice over mobile network and fixed calls over a PSTN.

Typically, a traditional single number system is static. It has no knowledge on user mobility and network locations, offering subscribers only some pre-defined or pre-determined Single Number services. When a caller wants to connect to a callee, i.e., MMT (Multi-Mode Terminal), the system tries the pre-defined services until the callee's available service is found. Thus, trying out those unavailable services and waiting for a response is inefficient and time consuming.

Various solutions have been advanced such as integrated wireless and wireline communication networks where a mobile unit in a wireless network and a fixed unit in a wireline network have a single number. Specifically, when the mobile unit is registered in a wireless network, incoming calls for the SN are routed to the mobile unit, and while the mobile unit is deactivated in the wireless network (e.g., power off, or outside the service region), incoming calls are routed to the fixed unit automatically. For example, WO 99/59357 describes such a method. However, the user mobility information used requires to be registered in advance and is not up-to-date in a real-time manner. Moreover, its single number service is network-specific and designed for the integration of mobile cellular and fixed networks only.

Therefore, systems such as the one described above do not provide a satisfactory solution for effectively enabling SN systems. As a result, lack of robustness, efficiency, and increased costs contribute to the shortcomings faced in some of these existing techniques.

In view of these concerns there is a continuing need for developing a new and improved method and system for efficiently managing and optimizing a SN solution which would avoid the shortcomings and above mentioned problems while being cost effective and simple to implement.

### SUMMARY OF THE INVENTION

Accordingly, it is an object of the present invention to provide an improved method and system to enable network intelligence and user mobility awareness in a real-time manner for SN solutions. In particular, the invention includes a method of providing a single number service in a system having a single number record table having records, each including a single number and a service preference list with a list of candidate services, to enable integrated network operators and services providers with a knowledge on user mobility and network location. The method includes storing user service availability information having a service table and network access availability information having an access network table, into an availability mapping table, and activating the single number service when a Multi-Mode Terminal (MMT) registers with a mobility management service or mobility manager. The method also deactivates the dynamic single number service when the MMT un-registers with the mobility management service or the mobility management service loses contact with the MMT. The method further updates the availability mapping table when the mobility management service verifies that a network report message comes from the MMT and determines at least one change has occurred in the service availability information field of the availability mapping table. Thereafter, the method returns a single number service reply message corresponding to the first available service on the service preference list to a caller.

One or more of the following features may also be included.

In one aspect, the updating of the mapping table also includes generating a network availability report having a plurality of the latest information to be sent to the mobility management service to update the access network table.

Embodiments may have one or more of the following advantages.

The present single number invention can readily find out the most appropriate service form and communication method in the context of current network availability. Such network-intelligent ability can greatly increase the efficiency of a unified service provision in the 'single number'-enabled convergence of heterogeneous network technologies. Moreover, the present SN solution avoids wasting precious time trying out the unavailable services.

Furthermore, the invention advantageously enhances compatibility with existing and traditional single number solutions. For example, if an activation flag is set as activated, the single number manager checks the information about service availability in a mapping table to launch a dynamic mobility-awareness single number service, otherwise, the static and traditional single number service process is performed by the single number manager.

Additionally, the present single number solution has the potential to provide truly personalized services, e.g. push services, peer-to-peer (P2P) services, location-based services, which depend heavily on the latest up-to-date information regarding the user network locations.

These and other aspects of the invention will become apparent from and elucidated with reference to the embodiments described in the following description, drawings and from the claims.

### BRIEF DESCRIPTION OF THE DRAWINGS

FIG.1 is a schematic diagram of a mobility awareness single number system, showing the implementation of an improved method and system according to one of the embodiments of the present invention;
FIG. 2 is a schematic diagram of a standard SN records and Availability Mapping Table (AMT), according to one of the embodiments of the present invention;
FIG. 3 is a schematic diagram of an exemplary SN records and Availability Mapping Table (AMT), according to one of the embodiments of the present invention;
FIG. 4 is another schematic diagram of an exemplary SN records and Availability Mapping Table (AMT), according to one of the embodiments of the present invention;
FIG. 5 illustrates a call flow diagram of the improved method to activate the mobility awareness SN system, according to one of the embodiments of the present invention;
FIG. 6 illustrates a call flow diagram of the improved method to deactivate the mobility awareness SN system;
FIG. 7 illustrates a call flow diagram of the improved method for updating the AMT table;
FIG. 8 is a flowchart diagram of the improved method, according to one of the embodiments of the present invention; and
FIG. 9 illustrates a call flow diagram of the improved method to set up a communication between a callee and a caller/communication manager, according to one of the embodiments of the present invention.

### DETAILED DESCRIPTION

In the context of this invention, when a Single Number service is referred to, by default, this means mobility awareness Single Number service, unless otherwise stated.

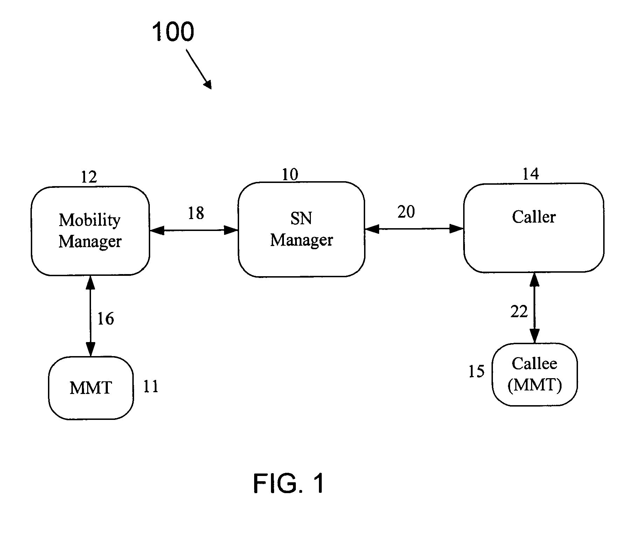

Referring to FIG. 1, a system architecture 100 of a mobility-awareness single number solution is illustrated. The system 100 requires the cooperation of four modules: a Single Number (SN) manager 10, a mobility management service or mobility manager 12, a caller 14 and a callee (a MMT) 15. The SN manager 10 constitutes the core SN entity enhanced by network intelligence. Moreover, the SN manager 10 cooperates with the mobility manager 12, the caller 14 and the callee (MMT) 15 to enable a dynamic SN service according to user mobility and current network locations.

Specifically, four messages flow through the system 100. A message flow 16, which is a network availability report, is sent by a multi-mode terminal MMT 11 to the mobility manager 12. A message exchange part 18 represents the process where the mobility manager 12 retrieves and updates the service availability information kept in the SN manager 10. Further, a message exchange process 20 is the process that the caller 14 requests a SN service from the SN manager 10, and a message exchange part 22 enables the connection setup between the communication parties, i.e., between the callee 15, i.e., a multi-mode terminal MMT 15 (e.g., a mobile cell phone) and the caller 14.

The SN manager 10 is, on one hand, the control point to handle all SN related requests from the caller 14. On the other hand, the SN manager 10 is updated passively by the mobility manager 12 so that it keeps the most up to date records about any service availability for a given user. Therefore, the SN manager 10 is capable of giving a specific service number according to current network conditions. Such number translation and selection process is done in a timely and accurate manner, and the SN manger 10 does not need to ask the mobility manager 12 for such information at that time due to the automatic records request and update process performed by the mobility manager 12 in advance. Further, the SN number is an abstract number (ID), which is used to uniquely identify one user from the other, and the specific service number is a real number used for specific application/technologies, such as MSISDN (mobile phone) number, a SIP VoIP number, and the like.

The mobility manager 12 is enhanced in this invention in several aspects. First, the mobility manager 12 is aware of terminal's all link qualities, both PS (packet switched) and CS (circuit switched), because of the enhanced ANEmn message. ANEmn herein refers to the use of network report messages. Secondly, with such intelligence, the mobility manager 12 is capable of doing the correct mapping between dynamic network availability and service availability. Moreover, the mobility manager 12 is able to request and update the corresponding SN records stored in the SN manager 10 side.

Referring now to the entity of the caller 14, the caller 14 and the callee 15 refer, unless specified otherwise, to entities or devices that send and receive calls. For the caller 14, it can be either a terminal or a communication (call) agent on behalf of a terminal. If the caller 14 is a call agent, the requirements on the end-user terminal side can be more flexible: the terminal can be either a new SN-enabled terminal or a classical terminal. For the latter case, a classical terminal may use any existing service number (e.g. MSISDN) to reach the callee via the call agent. The call agent must have the SN functions, and can perform number-translation between the callee's SN number and its service number, given by the classical terminal calling the callee, before it can request any SN service from the SN Manager 10 by using the callee's SN number as its unique index. The SN process between the call agent and the SN manager 10 and the calling process between the call agent and the callee are totally transparent to the classical calling terminal. In this fashion, a classical terminal (e.g., a telephone, a GSM mobile) can be re-used in a new SN service platform due to the number-translation capability of the SN-enabled call agent.

The callee 15 is an IPMM terminal with some SN enhancements, that is, it must add its CS network-condition report in its ANEmn messages sent to the mobility manager 12. Further, it needs to use its SN number as the unique user identity in its all ANEmn messages.

In an existing IPMM (IP Mobility Management) system, the terminal only reports PS network conditions via ANEmn messages (network report enhancement) to the mobility manager 12. In order for the mobility manager 12 to know the terminal's CS network conditions as well, CS is added to the network measurement entry into the ANEmn message. Based on this IPMM enhancement, the solution herein enables the mobility manager 12 and the SN manager 10 to realize a more general SN service across both PS and CS domains. The field format of this CS network measurement entry is exactly the same as that of the existing PS entry, but is filled with the CS network information. For example, a GSM measurement entry may look like this:
<MEASUREMENT>
<ACCESS_NETWORK_TYPE>GSM</ACCESS_NETWORK_TYPE>
<ACCESS_NETWORK_IDENTIFIER>MCC +MNC</ACCESS_NETWORK_ IDENTIFIER>
<ACCESS_POINT_IDENTIFIER>Cell ID</ACCESS_POINT_IDENTIFIER>
<QUALITY>3</QUALITY>
<CURRENT>false</CURRENT>
<MEASUREMENT>

Besides, a new 'SN_ID' field needs to be added to the ANEmn message, which acts as a unique user identify and index to manage user SN-related records. Its definition is as follows:

SN_ID: Uniquely identifies a given user who may have many particular service numbers. The SN_ID is an abstract number independent of any specific service/network-technology, and such a user ID can re-use any existing service number (e.g., MSISDN, IP address), or any new-defined number in future. Whatever number is used for SN_ID, it must be capable of uniquely identifying one user from another.

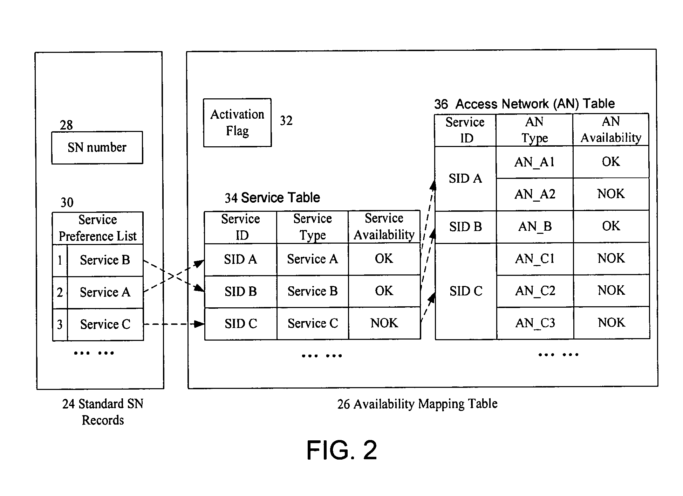

Referring now to FIG. 2, the system architecture 100 of FIG. 1 requires two tables, a Standard SN Records table 24 and an Availability Mapping Table (AMT) 26. In the standard SN records table 24, each user is identified by a SN number 28. And user may have several allowable services in the SN system 100, and all of those services are ranked in a Service Preference List 30.

The Availability Mapping Table 26 is the essential component for a dynamic SN service with mobility-awareness and it is defined by three parts: an Activation Flag 32, a Service Table 34 and an Access Network (AN) Table 36.

The Activation Flag 32 is used to indicate whether the dynamic SN service has been activated or not. The Service Table 34 includes the following fields: Service ID, Service Type and Service Availability. The Service ID is a unique identifier for a given user and service, through which a user may be reached using this service, such as a mobile station international subscriber directory number (MSISDN), a session initiation protocol identifier (SIP ID), fixed phone number, and the like. The Service Type denotes the service form, such as VoIP and Mobile Voice over circuit-switched (CS) resources, etc. And Service Availability refers to whether such service is available (OK) or unavailable (NOK) to use at a particular time.

In the Access Network Table 36, all networks supporting a particular service and their availability information are identified. The Service Availability is decided by the contents of the AN Table 36. For a given service type, for example, if any of the supporting networks is available, such service is available (e.g., service SID A in the Service Table 34). When none of the enabling networks for the service is available, the Access Network service becomes unavailable, such as is the case with service SID C in the table 34.

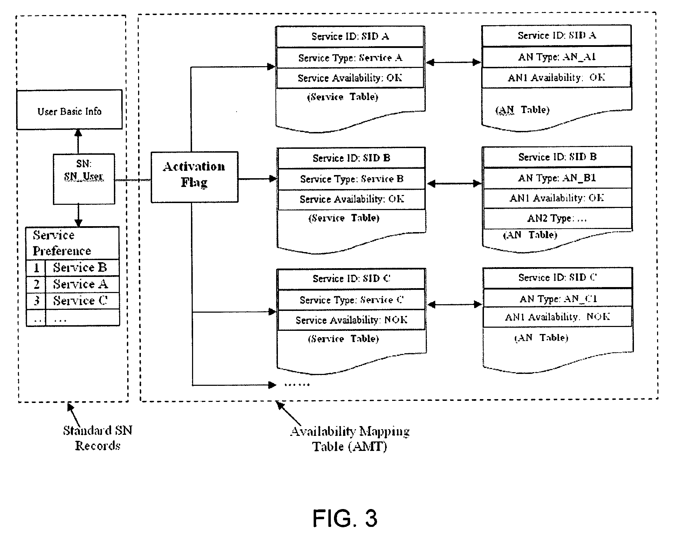

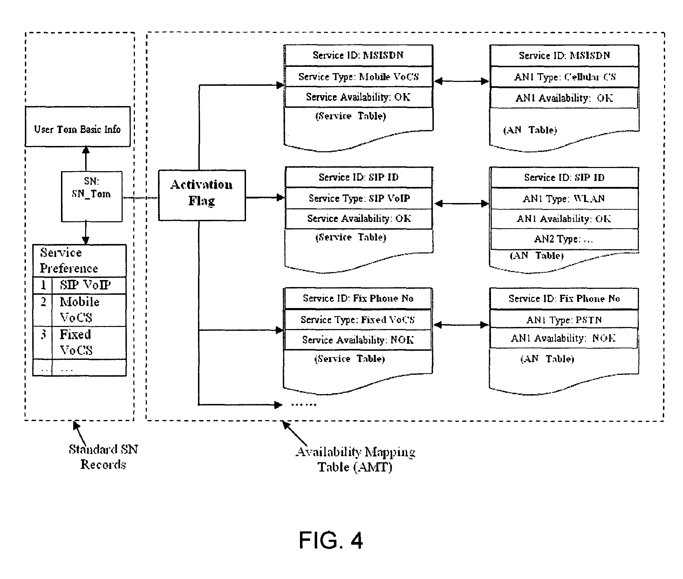

Referring to FIGs. 3 and 4, schematic diagrams of exemplary SN records and Availability Mapping Tables (AMT), are illustrated. FIG. 3 is an abstract presentation and FIG. 4 shows an actual example of a hypothetical case following the example of FIG. 3.

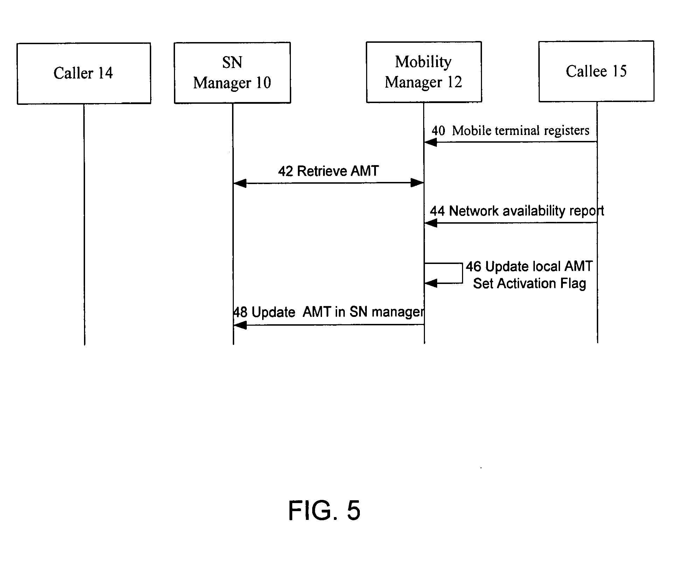

Referring now to FIG. 5, the activation of the mobility awareness SN service is illustrated. The proposed AMT table 26 is independent of existing and standard SN records and mechanisms. The Activation Flag 32 in the table 26 indicates whether the mobility-awareness SN service is activated or not. If the activation flag 32 is 1, the mobility-awareness service is activated and if the activation flag is 0, the mobility-awareness service is deactivated. Whenever the mobile terminal registers with the mobility manager 12 to begin, for example, an IPMM (IP mobility management) service as indicated by arrow 40, the mobility manager 12 activates the mobility-awareness SN Service.

The mobility manager 12 retrieves the user's AMT table 26 from the records of the SN manager 10 in the illustrated arrow 42. When the first network availability report comes from the terminal as indicated by arrow 44, the mobility manager 12 updates the retrieved AMT table 26, and sets the Activation Flag as 1 (activated) in arrow 46. The mobility manager 12 then updates the SN manager 10 on the corresponding records (i.e., the user's AMT table) in 48 and the dynamic SN service is activated.

The translation between abstract SN number and a specific service number for a given user is done by the SN manager 10. First, the caller 14 uses the called user's SN number to inquire the SN manager 10 what service number it should employ to reach the callee 15. Upon receipt of such a SN request, the SN manager 10 uses the called user's SN number as index to find the SN record. Then the SN manager 10 selects a specific service that the caller should use to call the callee 15 at that time according to the service preference and service availability information kept in the AMT table. Finally, the SN manager 10 returns the selected service number of the called user to the caller 14, by which the caller 14 can communicate with the callee 15 immediately. In this way, the number translation function is enabled in the SN manager 10, and any user can be contacted via different services by another user who only needs to remember his/her SN number 28 because of such dynamic number translation functions.

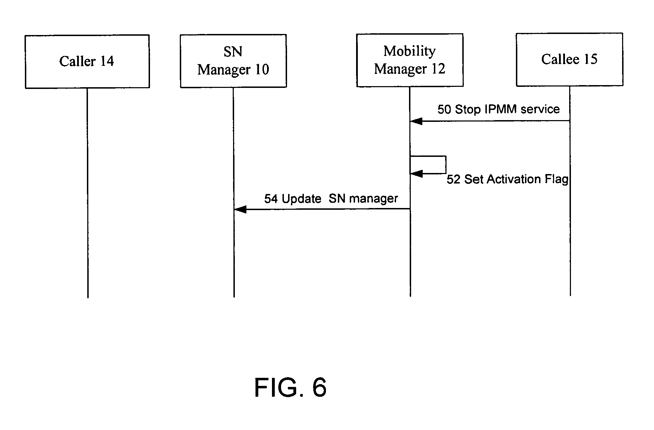

Referring to FIG. 6, the deactivation of the mobility awareness SN service is further illustrated. Whenever the callee 15 stops the IPMM service in 50 or the mobility manager 12 loses contact with the callee 15, the service deactivation process is performed as follows: the mobility manager 12 sets the Activation Flag as 0 (deactivated) in the AMT table as shown by arrow 52. Then, the mobility manager 12 updates the corresponding records kept in the SN manager 10 to deactivate the dynamic SN service as shown by arrow 54. When the SN manager receives a SN request, it first checks the Activation Flag in the AMT table 26. If the flag is set as activated, the SN manager further checks the information about service availability in the AMT table to launch a dynamic mobility-awareness SN service. Otherwise, the static and traditional SN service processes are performed by the SN manager. Consequently, the dynamic SN service can be used in a flexible manner, and is entirely back-compatible with existing and traditional SN solutions.

Now, the updating of the AMT table is described. After the dynamic SN service for a given user has been activated, the mobility manager keeps a local copy of the user's AMT table, for example, in the IPMM Register or any other database.

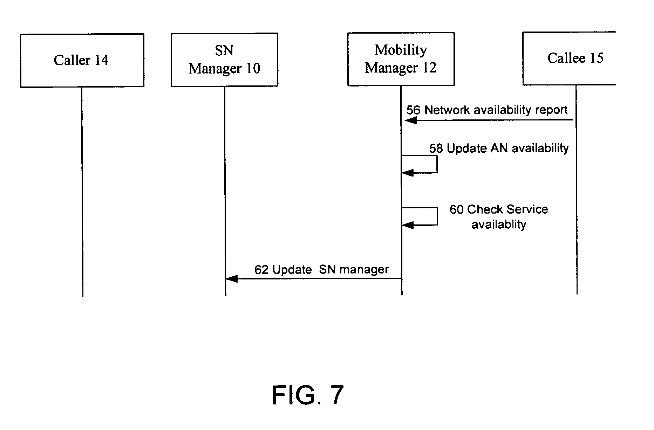

Referring to FIG. 7, the method for updating the AMT table is illustrated. Whenever the following network report messages come from the callee (MMT) 15 to the mobility manager as indicated by arrow 56, the mobility manager 12 first obtains the latest information about the network availability from these measurement reports. Then the mobility manager uses this latest information to update the corresponding 'AN Availability' fields of the local AMT table 58.

Next, the mobility manager checks if the 'Service Availability' field needs to be updated as indicated by arrow 60. That is, for each sub-table pair of Service Table and Access Network Table, the mobility manager verifies if all supporting networks become unavailable in the AN Table for a specific service. If so, the mobility manager sets the 'Service Availability' field in the Service Table as 'NOK', otherwise, the 'Service Availability' field is set as 'OK'.

Additionally, if after the update checks, any change has occurred in the 'Service Availability' fields of the local AMT table, the mobility manager 12 must update the corresponding AMT table records stored in the SN manager as indicated by arrow 62. Otherwise, no further action is required on the part of the mobility manager 12.

As a result, the SN manager always maintains an up-to-date knowledge about each user's network availability and each service's availability.

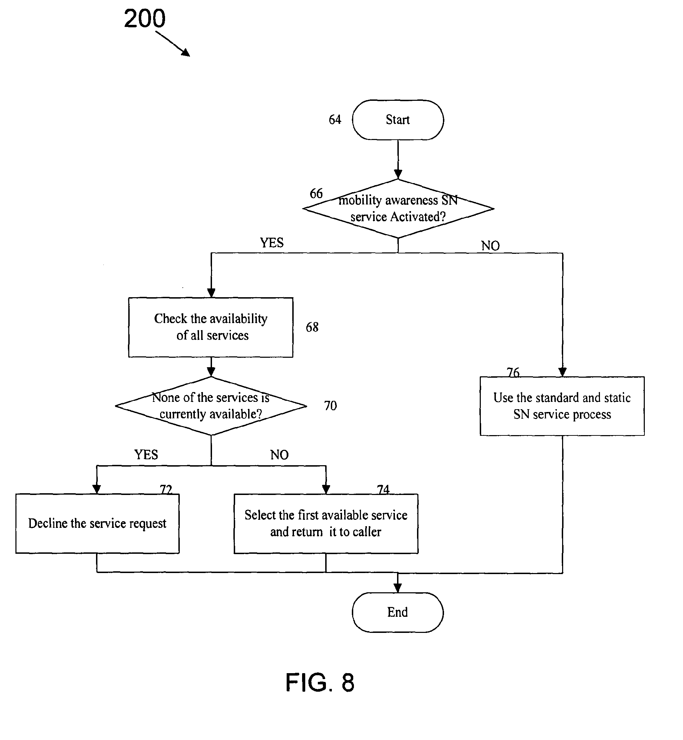

Referring now to FIG. 8, a flowchart 200 illustrates the method steps to verify and use the mobility awareness SN service.

The SN manager first verifies if the mobility awareness SN service of the callee is activated (step 66) or not. If yes, that is, the mobility aware SN is activated, then the SN manager 10 checks the availability of all candidate services in their priority order (step 68), which may be pre-defined in the service preference list. On the other hand, if the dynamic SN service is deactivated at this time, the SN manager 10 uses standard and static SN service processes (step 76).

But if the mobility awareness SN is activated, then it continues on to a step 70, where the method verifies if all the services are currently available. If no, that is, a service is currently available, then, the first available service is selected by the SN manager 10 as the current service type, and returned to the caller in a SN service reply message (step 74). However if yes, that is, none of the services are currently available at the step 70, then the SN manager 10 declines the service request (step 72).

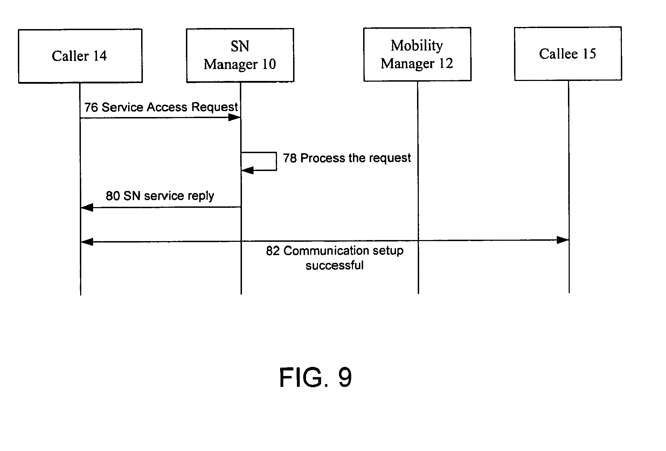

Referring to FIG. 9, a successful communication between a callee 15 and the caller 14 may be illustrated as follows. The caller or communication manager sends a SN service request to the SN manager with the index of the callee's SN number as indicated by arrow 76. When the SN service request arrives at the SN manager, the SN manager processes the request and returns a service reply according to the method to check and uses the dynamic SN service described above (arrow 78). Next, the SN manager returns the caller a dynamic SN service reply with the index of the user's SN number, i.e., the service ID (SID) of the selected service (arrow 80). Using the given SID from the SN manager, the caller successfully sets up the connection with the callee (arrow 82).

While there has been illustrated and described what are presently considered to be the preferred embodiments of the present invention, it will be understood by those of ordinary skill in the art that various other modifications may be made, and equivalents may be substituted, without departing from the true scope of the present invention.

Additionally, many advanced modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims and their equivalents.

## Claims

1. Method of providing a single number service in a system (100) having a single number record table (24) having records, each including a single number (28) and a service preference list (30) comprising a list of candidate services, to enable integrated network operators and services providers with a knowledge on user mobility and network location, **characterized in that** the method comprises:
- storing a plurality of user service availability information comprising a service table (34) and a plurality of network access availability information comprising an access network table (36), into an availability mapping table (26);
- activating the single number service when one multi-mode terminal (11) registers with a mobility management service (12);
- deactivating the single number service when the multi-mode terminal un-registers with the mobility management service or the mobility management service loses contact with the multi-mode terminal;
- updating the availability mapping table when the mobility management service verifies that a network report message comes from the user and determines at least one change has occurred in the service availability information field of the availability mapping table; and
- returning a single number service reply message corresponding to the first available service on the service preference list (30) to the caller (14).

2. The method according to claim 1, wherein the method further comprises:
- setting an activation flag (32) in the availability mapping table (26) to determine whether the single number has been activated (activation flag 1) or not (activation flag 0); and
- providing a service selection mechanism, wherein a single number manager (10) checks the activation flag and the availability of services in the list of candidate services in a priority order to identify the first available service.

3. The method according to any one of the preceding claims, wherein the updating of the mapping table comprises generating a network availability report comprising a plurality of the latest information to be sent to the mobility management service to update the access network table (36).

4. The method according to any one of the preceding claims, wherein if the single number service request designates a specific service type, the single number manager verifies the availability of said specific service type.

5. The method according to any one of the preceding claims, wherein if no service is currently available, the single number manager declines the single service request.

6. The method according to any one of the preceding claims, wherein if the single number service is deactivated, the single number manager uses a static and standard single number service mechanism.

7. A computer readable medium associated with a device having a sequence of instructions stored thereon which, when executed by a microprocessor of the device, causes the processor to implement the steps of the method according to claims 1-6.

8. A network entity (10; 12) configured to provide a single number service with a knowledge on user mobility and network location in a system (100) having a single number record table (24) having records, each including a single number (28) and a service preference list (30) comprising a list of candidate services, said network entity comprising means for storing a plurality of user service availability information comprising a service table (34) and a plurality of network access availability information comprising an access network table (36), into an availability mapping table (26); means for activating the single number service when one multi-mode terminal (11) registers with a mobility management service; means for deactivating the single number service when the multi-mode terminal un-registers with the mobility management service or the mobility management service loses contact with the multi-mode terminal; means for updating the availability mapping table in a single number manager (10) when the mobility management service (12) verifies that a network report message comes from the at least one multi-mode terminal and determines at least one change has occurred in the service availability information field of the availability mapping table; and means for returning a single number service reply message corresponding to the first available service on the service preference list (30) to the caller(14).

9. A system (100) configured to provide a single number service, said system having a single number record table (24) having records, each including a single number (28) and a service preference list (30) comprising a list of candidate services, to enable integrated network operators and services providers with a knowledge on user mobility and network location, **characterized in that** the system comprises:
- an availability mapping table (26) storing a plurality of user service availability information comprising a service table (34) and a plurality of network access availability information comprising an access network table (36);
- a mobility management service (12) configured to update the availability mapping table when the mobility management service verifies that a network report message comes from the user and determines at least one change has occurred in the service availability information field of the availability mapping table; and
- a single number manager (10) configured to (1) activate the single number service when one multi-mode terminal registers with a mobility management service, (2) deactivate the single number service when the multi-mode terminal un-registers with the mobility management service or the mobility management service loses contact with the multi-mode terminal, and (3) return a single number service reply message corresponding to the first available service on the service preference list (30) to the at least one multi-mode terminal (14).

10. The system of claim 9, wherein one multi-mode terminal is further configured to generate a network availability report comprising a plurality of the latest information to be sent to the mobility management service (12) to update the access network table (36).
